# EUROPEAN PATENT SPECIFICATION

(11) **EP 2 107 045 B1**
(45) Date of publication and mention of the grant of the patent: **22.03.2017**
(21) Application number: 07707973.9
(22) Date of filing: 02.02.2007
(51) Int. Cl.: B21C 3/02, C04B 35/645, C04B 35/52, C22C 26/00

(54) **DIAMOND SINTER AND PROCESS FOR PRODUCING THE SAME**
DIAMANTSINTERKÖRPER UND HERSTELLUNGSVERFAHREN DAFÜR
FRITTE DE DIAMANT ET SON PROCÉDÉ DE FABRICATION

(43) Date of publication of application: 07.10.2009
(73) Proprietor: Sumitomo Electric Hardmetal Corp., Itami-shi, Hyogo 664-0016 (JP)
(72) Inventor: KURODA, Yoshihiro, Itami-shi Hyogo 664-0016 (JP); KUKINO, Satoru, Itami-shi Hyogo 664-0016 (JP); YOSHIDA, Minoru, Itami-shi Hyogo 664-0016 (JP); FUKAYA, Tomohiro, Itami-shi Hyogo 664-0016 (JP)
(74) Representative: Grünecker Patent- und Rechtsanwälte PartG mbB
(86) International application number: PCT/JP2007/051824
(87) International publication number: WO 2008/096401

(56) References cited:
- JP-A- 07 156 003
- JP-A- 11 245 103
- JP-A- 53 114 589
- JP-A- 2005 239 472
- JP-B- 58 032 224
- JP-B2- 58 032 224

## Description

### TECHNICAL FIELD

The present invention relates to a diamond sintered body, having high strength and wear resistance, which is suitably used for a drawing die tool or the like.

### BACKGROUND ART

A diamond sintered body obtained by sintering diamond particles using a binder has excellent strength and wear resistance and is therefore used for a drawing die or the like. Particularly, a die consisting of a fine-grained diamond sintered body allows for a good wire surface in a drawn wire and a life much longer than a life allowed by a die made of natural diamond.

As the binder for the diamond sintered body, iron group metals, such as cobalt, having a catalytic ability to bind diamond particles are used. They are contained in gaps between the diamond particles. Unfortunately, the iron group metals have small hardness and have a function of facilitating graphitization to form an altered layer. In view of this, Patent Document 1 (Japanese Patent Laying-open No. 53-114589) and the like describe diamond sintered bodies from which an iron group metal is removed through an acid treatment after formation thereof.

From these diamond sintered bodies, the binder (iron group metal) is removed, and a void is generated in the sintered bodies, resulting in decreased strength. In light of this, there are proposed a wide variety of diamond sintered bodies for a tool (die) which have overcome the decreased life of the die caused by the removal of the iron group metal and the generation of the void. For example, Patent Document 2 (Japanese National Patent Publication No. 1-27141) discloses a sintered body that employs a binder containing added carbide, solid solution, or crystal of a mixture of metals of groups 4a, 5a, 6a in the periodic table (groups 4, 5, 6 in the current periodic table) (claim 1). As the carbide of the metals of the groups 4a, 5a, 6a in the periodic table, tungsten carbide, a solid solution of molybdenum, tungsten and carbon ((Mo, W) C), or the like is disclosed (claim 2).

Patent Document 3 (Japanese Patent Laying-open No. 11-245103) discloses a sintered body having a surface portion from which a larger amount of an iron group metal is removed through an acid treatment than that from its inner portion to restrain decrease of strength in the inner portion. Unfortunately, the strength of the surface portion of this sintered body is low.
Patent Document 1: Japanese Patent Laying-open No. 53-114589
Patent Document 2: Japanese National Patent Publication No. 1-27141 (claims 1, 2)
Patent Document 3: Japanese Patent Laying-open No. 11-245103
Patent Document 4: JP 2005-239472 discloses a method for producing a diamond sintered body by dry-blending (i) diamond powder having an average particle diameter of 0.8 µm with (ii) a powder mixture of Co metal and Ti metal under a vacuum of 0.1 Pa at a furnace temperature of 300°C and then sintering them (for example, Example 1). According to this production method, part or all of Ti can discontinuously exist in the diamond sintered body as carbide particles. This facilitates neck growth of the diamond particles, thereby solving a problem of "insufficiency in forming a skeleton through neck growth of diamond particles."
Patent Document 5: JP580322224 discloses a method for producing a diamond sintered body by pulverizing and mixing synthetic diamond powder having a particle diameter of 0.5 µm with WC powder and Co powder and sintering them (for example, Example 1). According to this production method, particle growth of fine diamond powder is suppressed. Accordingly, the following object is achieved: "the crystal particle diameter of the diamond sintering body becomes very fine such as not more than 1 µm."

### DISCLOSURE OF THE INVENTION

### PROBLEMS TO BE SOLVED BY THE INVENTION

An object of the present invention is to provide a diamond sintered body having higher strength and more excellent wear resistance than the above-described conventional diamond sintered bodies.

### MEANS FOR SOLVING THE PROBLEMS

As a result of diligent researches, the present inventors found that a diamond sintered body having a high strength and excellent wear resistance can be obtained even though an iron group element is removed from the sintered body through an acid treatment or the like, and completed the present invention. Such a diamond sintered body can be obtained using a binder that contains the iron group element, a solid solution containing at least one element selected from a group consisting of titanium, zirconium, vanadium, niobium, and chromium, carbon, and tungsten, when the content of diamond particles falls within a predetermined range.

The present invention provides a diamond sintered body according to claim 1.

A ratio of the volume of the diamond particles to the total volume of the diamond particles, the binder, and the void is equal to or greater than 80 % by volume but is less than 98 % by volume. Here, the term "% by volume" refers to a ratio of the total volume of the diamond particles to the entire volume of the diamond sintered body including the void ("% by volume" has the same meaning in the description below). The binder has a hardness smaller than that of diamond. Hence, with the content of the diamond particles being not less than 80 % by volume, decrease of the hardness is prevented to achieve excellent strength such as shock resistance as well as excellent wear resistance. On the other hand, if the content of the diamond particles is 98 % by volume or greater, the content of the iron group element has to be small upon the sintering. Accordingly, the catalytic ability thereof cannot be attained sufficiently and neck growth does not make progress, with the result that the strength tends to decrease. The diamond particles constituting the diamond sintered body of the present invention have an average particle diameter of 2 µm or less. Such a small average particle diameter of 2 µm or less allows for restraint of decrease in the strength of the diamond sintered body caused by cleavage of the diamond particles or the like. By using the above-described binder and controlling it to be discontinuous upon producing the diamond sintered body, a diamond sintered body having an average particle diameter falling within the above-described range can be obtained. A method and conditions for controlling the binder to be discontinuous are disclosed in Japanese Patent Laying-open No. 2005-239472 or the like.

A feature of the diamond particles contained in the diamond sintered body of the present invention lies in that neighboring diamond particles are bonded to one another. Such bonds between the neighboring diamond particles result in excellent strength. In order to obtain such bonds, in a step of dissolving and re-precipitating raw diamond powder to form diamond crystal (step of forming the sintered body), direct bonds called neck growth are formed between the diamond particles using a binder having a catalytic ability such as an iron group element.

It should be noted that, in the present invention, whether or not the neighboring ones of the diamond particles contained in the diamond sintered body are bonded to one another can be determined from deflective strength obtained after removal of components other than the diamond. Specifically, the sintered body is shaped in the form of a rectangle having a length of 6 mm, a width of 3 mm, and a thickness of 0.4-0.45 mm, and then is treated for 48 hours at 120 °C or greater but less than 150 °C in a closed container through fluorinated acid containing a mixture of 40 ml of double-diluted one of nitric acid having a concentration of 60 % or greater but less than 65 % and 10 ml of hydrofluoric acid having a concentration of 45 % or greater but less than 50 %, to obtain a sintered body from which components other than the diamond are removed. Under conditions of 4mm span, the deflective strength of such a sintered body is measured by means of three-point bending strength measurement. If the sintered body has a deflective strength not less than 1.3 GPa, it is assumed in the present invention that neighboring diamond particles are bonded to one another.

The binder constituting the diamond sintered body of the present invention contains an iron group element having a catalytic ability of precipitating diamond crystal to form neck growth between diamond particles; and a solid solution of at least one element (hereinafter, referred to as "element Z") selected from a group consisting of titanium, zirconium, vanadium, niobium, and chromium, carbon, and tungsten.

The above-described solid solution is less likely to be dissolved and removed by a below-described acid treatment and has hardness higher than the iron group element. Hence, the binder containing the solid solution has high hardness and improves the hardness of the diamond sintered body. Also, resistance to chemical reaction, such as heat resistance and oxidation resistance, is high therein, allowing for high wear resistance. Furthermore, the strength thereof is high due to solute strengthening, thus achieving high defect resistance (deflective strength) and shock resistance. As a result, the diamond sintered body exhibits excellent performance for use in a drawing die.

The above-described solid solution contains element Z, tungsten, and carbon, and preferably contains element Z as carbide. The solid solution thus containing the carbide of element Z is less likely to be dissolved and removed by the acid treatment, thereby improving the strength, the wear resistance, and the like of the diamond sintered body. When the solid solution contains an element of group 4, 5, or 6 in the periodic table other than element Z, for example, carbide of molybdenum, the solid solution is more likely to be dissolved by the acid treatment as compared with the solid solution containing the carbide of element Z. Accordingly, the strength and wear resistance thereof is insufficient.

It is preferable that the solid solution include tungsten as carbide in addition to the carbide of element Z. The solid solution thus containing both the carbide of element Z and the carbide of tungsten allows for further improved strength and wear resistance, thereby attaining more excellent strength and wear resistance than those of a conventional diamond sintered body including only one of the carbide of element Z and the carbide of tungsten.

A feature of the present invention lies in that element Z, tungsten, and carbon included in the above-described binder form the solid solution. The solid solution thus formed allows for more excellent strength and wear resistance than those of a conventional diamond sintered body. Such excellent strength cannot be obtained when the carbide powder of element Z and the carbide powder of tungsten do not form a solid solution and are merely mixed.

The solid solution can further contain oxygen, nitrogen, and the like. These elements, particularly nitrogen, are likely to be included in the binder in the step of forming the diamond sintered body.

In addition to the diamond particles and the binder included in a gap between the particles, the diamond sintered body of the present invention has a void in the gap between the particles. The void is inevitably produced when the iron group element added in the binder as a catalyst for growth of the diamond particles and bonds between the particles is removed through the acid treatment or the like after the sintering.

The void causes decreases in the strength of the diamond sintered body and the life of a drawn wire, so it is desired that the content thereof is small, preferably, is less than 10 % by volume. However, in order to render the content of the void small, the content of the iron group element needs to be small upon the sintering. In this case, production of the neck growth is insufficient and the strength is likely to be decreased accordingly. Hence, the void is contained therein by at least 0.1 % by volume.

The present invention further provides the following configuration as a preferable embodiment of the diamond sintered body.

That is, in the above-described diamond sintered body, the content of the solid solution containing at least one element of the group consisting of titanium, zirconium, vanadium, niobium, and chromium, carbon, and tungsten is equal to or greater than 0.1 % by volume but less than 15 % by volume, and the content of the iron group element is equal to or greater than 0.1 % by volume but less than 3 % by volume.

If the content of the solid solution containing element Z, carbon, and tungsten is less than 0.1 % by volume, excellent strength, wear resistance, and the like are less likely to obtained. On the other hand, if the content thereof is equal to or greater than 15 % by volume, the content of the iron group element has to be small upon the sintering, with the result that the neck growth is less likely to make progress and the strength tends to decrease.

Further, when the content of the iron group element is equal to or greater than 3 % by volume, problems are likely to occur such as facilitation of graphitization and decrease in the strength. Meanwhile, to render the content of the iron group element less than 0.1 % by volume, conditions of the acid treatment need to be severe, for example, the acid treatment needs to be performed longer in time using a strong acid. In such a case, the solid solution is likely to be dissolved too. Excellent strength and wear resistance can be obtained even when the content of the iron group element is approximately 0.1 % by volume, so it is preferable that the content of the iron group element be 0.1 % by volume or greater.

A feature of the present invention lies in that, in the above-described diamond sintered body, a component ratio of at least one element selected from the group consisting of titanium, zirconium, vanadium, niobium, and chromium to tungsten is in a range of not less than 0.4 but not more than 15.0 in the atomic ratio in the solid solution. When the component ratio of element Z to tungsten in the solid solution is in the range of 0.4 ≤ element Z/tungsten ≤ 15.0 in the atomic ratio, more excellent strength and wear resistance are obtained to achieve longer life of a drawn wire. In this range, a range of 0.4 ≤ element Z/tungsten ≤ 3.0 is particular preferable and allows for further longer life of the drawn wire.

A feature of the present invention lies in that, in the above-described diamond sintered body, element Z, i.e., at least one element selected from the group consisting of titanium, zirconium, vanadium, niobium, and chromium is titanium. When titanium is used for element Z, the solid solution is less likely to be dissolved by the acid treatment, thus allowing for more excellent strength and wear resistance of the sintered body and longer life of a drawn wire.

A feature of the present invention lies in that the iron group element is cobalt in the above-described diamond sintered body. Examples of the iron group element include iron, nickel, and cobalt. Among them, cobalt has a high catalytic ability and is therefore preferable.

A diamond sintered body of the present invention can be produced by a method according to claim 6 including the steps of:
mixing at least one element (element Z) selected from a group consisting of titanium, zirconium, vanadium, niobium, and chromium, carbon and tungsten, an iron group element, and diamond powder;
sintering an obtained mixture at a high temperature under a high pressure at and under which diamond is thermodynamically stable, so as to form a sintered body X including a binder containing a solid solution containing element Z, carbon and tungsten, and the iron group element, as well as diamond particles having neighboring particles bonded to each other; and
performing an acid treatment onto sintered body X to elute the iron group element. The present invention also provides this production method.

The step of mixing element Z, carbon and tungsten, the iron group element, and the diamond powder can be performed by, for example, dry-mixing powder of the solid solution of element Z, carbon, and tungsten, powder of the iron group element, and the diamond powder. Sintering is performed after such dry mixing to obtain sintered body X containing the solid solution of element Z, carbon, and tungsten as the binder. The solid solution to be mixed with the iron group element and the diamond powder can be obtained as follows. That is, the powder of the carbide of element Z and the powder of the carbide of tungsten are mixed separately from the diamond powder, and then are heated at 1300 °C or greater and subjected to a pressure of 3 GPa or greater to dissolve them. The solid solution thus obtained is pulverized using a ball mill or the like and is mixed therewith.

The powder of the solid solution is preferably added as particles having an average particle diameter of 0.8 µm or smaller, so as to be discontinuous from one another. By controlling the particles not to be continuous, neck growth is facilitated between the diamond particles to form a rigid skeleton. The strength is improved.

The powder of the above-described iron group element may be metal powder, or ceramics powder consisting of carbide of these elements or the like may be used. However, the use of the metal powder more likely achieves further rigid diamond bonding.

Instead of dry-mixing the powder of the solid solution, the powder of the iron group element, and the diamond powder, the surface of the diamond powder may be coated discontinuously with at least one selected from element Z, a carbide of element Z, and a solid solution of the carbide of element Z and tungsten carbide, using the PVD (Physical Vapor Deposition) method or the like by 20-80% of the surface area of the diamond powder. Even when the diamond powder is coated with only element Z or the carbide of element Z using the PVD method and is mixed with powder of the other components, the solid solution of element Z, tungsten, and carbon is produced in the sintering step, and a diamond sintered body with excellent strength, wear resistance, and the like is obtained. However, when the diamond powder is coated with tungsten carbide using the PVD method and is mixed with powder of the other components, the solid solution of element Z, tungsten, and carbon is not produced in the sintering step.

The sintering can be performed by retaining the above-described mixture in a mold of an extra-high pressure generating device for approximately 10 minutes preferably under a pressure of not less than 5.0 GPa but not more than 8.0 GPa and at a temperature of not less than 1500 °C but not more than 1900 °C. In consideration of durability of the mold, a pressure greater than 8.0 GPa is less practical. With the temperature being higher than 1900 °C, the equilibrium between diamond and graphite is exceeded and a stable range of graphite is presented. Accordingly, graphitization of diamond is facilitated. In consideration of the durability of the mold of the extra-high pressure generating device as well as the performance of the diamond sintered body, it is more preferable to retain the mixture for approximately 10 minutes under a pressure of not less than 5.7 GPa but not more than 7.7 GPa and at a temperature of not less than 1500 °C but not more than 1900 °C.

After the sintering but before the acid treatment, the content of the solid solution in the binder is preferably 1 % by weight or greater but less than 50 % by weight. When the content of the solid solution is smaller than the above range, excellent strength, wear resistance, and the like are less likely to be obtained. On the other hand, when the content of the solid solution exceeds the above range, the content of the iron group element is small and it is therefore difficult to obtain a catalytic ability sufficient to facilitate neck growth of the diamond particles, with the result that problems such as decrease in the strength are likely to occur.

After the sintering, the diamond sintered body is subjected to the acid treatment to elute the iron group element from the binder. However, even with the acid treatment, a part of the iron group element remains in the binder. The elution of the iron group element from the binder results in production of the void in the diamond sintered body.

The acid treatment can be performed by immersing the diamond sintered body in an acid solution to dissolve the iron group element. As the acid solution, a solution containing at least one selected from a group consisting of nitric acid and hydrochloric acid is preferably exemplified because it dissolves the iron group element sufficiently but is unlikely to dissolve the solid solution.

The diamond sintered body obtained in this way is more excellent than the conventional diamond sintered body in terms of the strength and the wear resistance, and is suitably used for a drawing die tool and the like. The drawing die tool can be manufactured by opening a hole in this diamond sintered body by means of a laser or the like and lapping the hole.

### EFFECTS OF THE INVENTION

A diamond sintered body of the present invention is a sintered body having a void formed due to an acid treatment performed to remove an iron group element contained in the sintered body as a binder but having higher strength and more excellent wear resistance than a conventional diamond sintered body having such a void. Hence, the diamond sintered body of the present invention is suitably used for a drawing die tool requiring excellent strength and wear resistance. When the drawing die tool employing this diamond sintered body is used to draw a wire, the surface condition of the drawn wire can be good and the life thereof can be long.

This diamond sintered body can be readily obtained using a method for producing a diamond sintered body of the present invention.

### BEST MODES FOR CARRYING OUT THE INVENTION

Now, referring to examples, the present invention will be described more specifically. The examples do not limit the scope of the present invention.

### Example 1

Diamond sintered bodies A-N containing binder components shown in Table 1 were produced and used to draw saw wires (brass-plated steel wires), and the lives of the drawn wires were measured. Here, the lives of the drawn wires are indicated by the weights of the wires drawn until the drawn wires became so thick in shape that their wire diameters or roundness went below standard, or until color tones of the drawn wires were found decreased when measured by visual check or a color difference meter. Note that sintered bodies C, D, and F-L are examples of the present invention, whereas sintered bodies A, B, E, M, N are comparative examples.

### (Production of the diamond sintered body)

Diamond powder having an average particle diameter of 1 µm as well as cobalt powder and carbides in Table 1 each serving as a binder (solid solution) were used and dry-mixed at a mixing ratio shown in Table 1 (percent by volume of each component relative to the total volume of diamond, carbide, and cobalt). A carbide used to produce sintered bodies A, B was tungsten carbide. A carbide used to produce sintered bodies C-N was obtained by pulverizing a solid solution, which is obtained by mixing a carbide of each element (titanium, chromium, molybdenum, or vanadium) shown in Table 1 with tungsten carbide powder in an atomic ratio shown in Table 1, and retaining it for five minutes under a pressure of 5.5 GPa at a temperature of 1400 °C.

The mixture thus obtained was brought into contact with a base material (disk) formed of a hard metal, and is introduced in a container made of tantalum. Then, the mixture was retained and sintered for 10 minutes under a pressure of 5.8 GPa at a temperature of 1500 °C using a belt type extra-high pressurizing device, to obtain diamond sintered bodies. The diamond sintered bodies thus obtained were subjected to the acid treatment, namely, were immersed in double-diluted one of nitric acid having a concentration of 60 % or greater but less than 65 % within a closed container, at 80 °C or greater but less than 100 °C for 100 hours.

Through an SEM (scanning electron microscope) secondary electron image, the particle diameters of the diamond particles of the obtained diamond sintered body were checked and the average particle diameter thereof was 1.2 µm.

### (Measurement of the contents of the cobalt and carbide)

The cobalt and carbide contained in each of the diamond sintered bodies obtained as above were measured through an XRD (X-ray diffraction), a TEM (transmission electron microscope), and an AES (Auger electron spectroscopy) to detect the cobalt and carbide. Quantitative measurement of each element was performed using a high-frequency inductively-coupled plasma emission analyzing method (ICP method) to calculate the content of each element (percent by volume thereof relative to the total volume of diamond sintered body). In addition, a method described below was used to calculate the percent by volume of the void. These calculated values are shown in Table 1.

The method for calculating the percent by volume of the void is as follows. Before and after the acid treatment, the percent by volume of the cobalt and carbide was calculated. Assuming that the percent by volume of the diamond particles was unchanged, the decrease from the percent by volume of the cobalt and carbide caused by the acid treatment was regarded as the percent by volume of the void.

Each of the sintered bodies was shaped in the form of a rectangle having a length of 6 mm, a width of 3 mm, and a thickness of 0.4-0.45 mm. They were treated in closed containers for 48 hours at 120°C or greater but less than 150 °C, using fluorinated acid obtained by mixing 40 ml of double-diluted one of nitric acid having a concentration of 60 % or greater but less than 65 % with 10 ml of hydrofluoric acid having a concentration of 45 % or greater but less than 50 %. In this way, components other than diamond were removed from the sintered bodies and their deflective strengths were measured by means of the three-point bending strength measurement under conditions of 4 mm span. The deflective strengths thus measured were as follows. Sintered body A: 1.3 GPa; Sintered body B: 1.4 GPa; Sintered body C: 1.6 GPa; Sintered body D: 1.6 GPa; Sintered body E: 1.6 GPa; Sintered body F: 1.6 GPa; Sintered body G: 1.6 GPa; Sintered body H: 1.6 GPa; Sintered body I: 1.6 GPa; Sintered body J: 1.6 GPa; Sintered body K: 1.3 GPa; Sintered body L: 1.4 GPa; Sintered body M: 0.7 GPa; Sintered body N: 1.3 GPa. Hence, it can be said that neighboring diamond particles of sintered bodies A-L and N were bonded to one another.

**Table 1**

| Sample No. | Composition of mixed powder (% by volume) | | | Composition after nitric acid treatment (% by volume) | | | |
|---|---|---|---|---|---|---|---|
| | Diamond | Carbide [atomic ratio] | Co | Diamond | Carbide | Co | Void |
| A | 86.2 | WC:0.8 | 13.0 | 86.2 | WC:0.2 | 0.7 | 12.9 |
| B | 83.6 | WC:4.5 | 11.9 | 83.6 | WC:2.5 | 0.9 | 13.0 |
| C | 87.0 | (Ti,W)C:4.5 [Ti: W:C=1:1:2] | 8.5 | 87.0 | (Ti,W)C:4.2 | 0.8 | 8.0 |
| D | 87.2 | (Cr,W)C:4.4 [Cr:W:C=1:1:2] | 8.4 | 87.2 | (Cr,W)C:3.2 | 0.9 | 8.7 |
| E | 86.8 | (Mo,W)C:4.6 [Mo:W:C=1:1:2] | 8.6 | 86.9 | (Mo,W)C:3.2 | 0.7 | 9.2 |
| F | 87.1 | (Ti,W)C:4.5 [Ti:W:C=2:1:3] | 8.5 | 87.1 | (Ti,W)C:4.1 | 0.8 | 8.0 |
| G | 86.9 | (Ti,W)C:4.5 [Ti:W:C=9:1:10] | 8.6 | 86.9 | (Ti,W)C:4.0 | 0.9 | 8.2 |
| H | 87.0 | (Ti,W)C:4.6 [Ti:W:C=16:1:17] | 8.5 | 87.0 | (Ti,W)C:4.0 | 0.8 | 8.2 |
| I | 87.1 | (Ti,W)C:4.5 [Ti:W:C=1:5:6] | 8.4 | 87.1 | (Ti,W)C:3.8 | 0.8 | 8.3 |
| J | 87.2 | (V,W)C:4.5 [V:W:C=1:1:2] | 8.3 | 87.2 | (V,W)C:3.2 | 0.7 | 8.9 |
| K | 80.0 | (Ti,W)C:4.5 | 15.5 | 80.0 | (Ti,W)C:4.2 | 1.8 | 14.0 |
| L | 97.9 | (Ti,W)C:1.0 [Ti:W:C=1:1:2] | 1.1 | 97.9 | (Ti,W)C:0.8 | 0.5 | 0.8 |
| M | 99.0 | (Ti,W)C:0.5 [Ti:W:C=1:1:2] | 0.5 | 99.0 | (Ti,W)C:0.3 | 0.3 | 0.4 |
| N | 75.1 | (Ti,W)C:4.5 [Ti:W:C=1:1:2] | 20.4 | 75.1 | (Ti,W)C:4.2 | 3.8 | 16.9 |

After the acid treatment, each of the sintered bodies was provided with a prepared hole by means of laser processing and was lapped to form a die having a hole diameter ϕ of 0.175 mm. Using such dies, saw wires (brass-plated steel wires) were drawn at a linear velocity of 850 m/min in a wet manner. The results thereof are shown in Table 2.

**Table 2**

| Sample No. | Drawn wire's life (Kg) |
|---|---|
| A | 101 |
| B | 102 |
| C | 154 |
| D | 141 |
| E | 103 |
| F | 152 |
| G | 146 |
| H | 128 |
| I | 130 |
| J | 128 |
| K | 125 |
| L | 130 |
| M | 30(*) |
| N | 40 |

| | |
|---|---|
| * Chipping caused a flaw on the wire surface. Its life ended in 30 minutes. | |

For sintered bodies A, B, the content of the cobalt was high in the raw material powder. Further, they contained only tungsten carbide as carbide. Most of the cobalt was dissolved by the acid treatment and a part of the tungsten carbide was also dissolved, resulting in a high content of the void. Accordingly, the surface conditions of the drawn wires were bad and their lives were short. In contrast, for sintered bodies C, D, and F-I in each of which tungsten, element Z, and carbon form the solid solution, the cobalt was dissolved through the acid treatment but dissolution of the solid solution was small, resulting in a low content of the void. Accordingly, the surface conditions of drawn wires were good and the lives thereof were long.

Among them, in the case of sintered bodies C, F-I, J, K, and L in which titanium was used as element Z, dissolution of the solid solution was particularly small. In addition, due to the function of the solid solution as a binder, the lives of drawn wires were longest. However, in the case of sintered body E in which molybdenum was used instead of titanium or chromium that were element Z, the solid solution was dissolved more as compared with the cases of sintered bodies C, D, and F-I. Accordingly, the life of a drawn wire was shorter than those in the case of sintered bodies C, D, and F-I. Among sintered bodies C and F-I employing titanium as element Z, the lives of the wires drawn using sintered bodies C, F, G tend to be long and the lives of the wires drawn using sintered body I in which titanium/tungsten was less than 0.4 and sintered body H in which titanium /tungsten was more than 15 tend to be short.

In sintered body M, the amount of the binder relative to that of the diamond was insufficient. Hence, the binder's catalyst function did not allow production of sufficient neck growth between the diamond particles, resulting in a short life of the drawn wire. In sintered body N, the content of the binder is too much larger than the content of the diamond. This results in a large content of the void after the acid treatment. Hence, as compared with the sintered bodies of the present invention, the life of the drawn wire was shorter.

### Example 2

Sintering was performed in a way similar to that in Example 1 to obtain sintered bodies A-I. Sintered bodies A-I thus obtained were subjected to an acid treatment using diluted nitric acid in a manner similar to that in Example 1. Thereafter, the sintered bodies were provided with prepared holes by means of laser processing and were lapped to form dies each having a hole diameter ϕ of 0.4 mm, The dies were used to draw stainless steel wires (SUS304) at a linear velocity of 400 m/min in a wet manner. Then, the lives of the drawn wires were measured. The results thereof are shown in Table 3.

**Table 3**

| Sample No. | Drawn wire's life (ton) |
|---|---|
| A | 0.7 |
| B | 0.5 |
| C | 1.0 |
| D | 0.8 |
| E | 0.7 |
| F | 0.9 |
| G | 0.9 |
| H | 0.8 |
| I | 0.8 |

As shown in Table 3, when the stainless steel wires were used instead of the saw wires, results similar to those in Example 1 were obtained. In other words, sintered bodies C, D, and F-I in which tungsten, element Z, and carbon formed the solid solution allowed for long lives of drawn wires. In contrast, in the case of sintered bodies A and B in which tungsten did not form the solid solution and sintered body E employing a solid solution containing molybdenum, the lives of drawn wires are shorter than those in the case of sintered bodies C, D, and F-I.

## Claims

1. A diamond sintered body comprising diamond particles, a binder, and a void,
said diamond particles having an average particle diameter of 2 µm or less;
said diamond particles having a content of not less than 80 % by volume but less than 98 % by volume,
said binder including a solid solution as well as an iron group element, wherein said solid solution contains carbon and tungsten and at least one element selected from a group consisting of titanium, zirconium, vanadium, niobium and chromium,
said solid solution having a content of not less than 0.1 % by volume but less than 15 % by volume, and the iron group element having a content of not less than 0.1 % by volume but less than 3 % by volume;
neighboring ones of said diamond particles being bonded to one another.

2. The diamond sintered body according to claim 1, wherein the void has a content of not less than 0.1 % by volume but less than 10 % by volume.

3. The diamond sintered body according to any one of claims 1 to 2, wherein in said solid solution, a component ratio of said at least one element selected from the group consisting of titanium, zirconium, vanadium, niobium, and chromium to tungsten is in a range of not less than 0.4 but not more than 15.0 in an atomic ratio.

4. The diamond sintered body according to any one of claims 1 to 3, wherein said at least one element selected from the group consisting of titanium, zirconium, vanadium, niobium, and chromium is titanium.

5. The diamond sintered body according to any one of claims 1 to 4 wherein the iron group element is cobalt.

6. A method for producing a diamond sintered body as defined in claim 1, comprising the steps of
mixing carbon and tungsten and at least one element selected from a group consisting of titanium, zirconium, vanadium, niobium and chromium, as well as an iron group element, and diamond powder to obtain a mixture thereof;
sintering said mixture at a high temperature under a high pressure at and under which diamond is thermodynamically stable, so as to form a sintered body X including a binder containing a solid solution containing said element, carbon, tungsten and said iron group element, as well as diamond particles having neighboring particles bonded to one another; and
performing an acid treatment onto said sintered body X to elute the iron group element.

7. The method according to claim 6, wherein said acid treatment is performed by immersing the sintered body X in an acid solution containing at least one selected from a group consisting of nitric acid and hydrochloric acid.

## Patentansprüche

1. Diamant-Sinterkörper mit Diamantteilchen, einem Bindemittel und einem Hohlraum,
wobei die Diamantteilchen einen mittleren Teilchendurchmesser von 2 µm oder weniger aufweisen;
wobei die Diamantteilchen einen Gehalt von nicht weniger als 80 Vol.-%, aber weniger als 98 Vol.-% aufweisen,
wobei das Bindemittel eine feste Lösung sowie ein Eisengruppenelement enthält, wobei die feste Lösung Kohlenstoff und Wolfram und mindestens ein Element ausgewählt aus der Gruppe bestehend aus Titan, Zirkon, Vanadium, Niob und Chrom enthält,
wobei die feste Lösung einen Gehalt von nicht weniger als 0,1 Vol.-%, aber weniger als 15Vol.-% aufweist, und das Eisengruppenelement einen Gehalt von nicht weniger als 0,1 Vol.-% aber weniger als 3 Vol.-% aufweist;
wobei benachbarte Diamantteilchen miteinander verbunden sind.

2. Diamantsinterkörper nach Anspruch 1, wobei der Hohlraum einen Gehalt von nicht weniger als 0,1 Vol.-%, aber weniger als 10 Vol.% aufweist.

3. Diamant-Sinterkörper nach einem der Ansprüche 1 bis 2, wobei in der festen Lösung ein Komponentenverhältnis des mindestens einen Elements ausgewählt aus der Gruppe bestehend aus Titan, Zirkon, Vanadium, Niob und Chrom zu Wolfram in einem Atomverhältnisbereich von nicht weniger als 0,4, aber nicht mehr als 15,0 liegt.

4. Diamantsinterkörper nach einem der Ansprüche 1 bis 3, wobei das mindestens eine Element ausgewählt aus der Gruppe bestehend aus Titan, Zirkon, Vanadium, Niob und Chrom Titan ist.

5. Diamantsinterkörper nach einem der Ansprüche 1 bis 4, wobei das Eisengruppenelement Kobalt ist.

6. Verfahren zur Herstellung eines Diamant-Sinterkörpers nach Anspruch 1, mit den Schritten:
Mischen von Kohlenstoff und Wolfram und wenigstens ein Element ausgewählt aus einer Gruppe bestehend aus Titan, Zirkonium, Vanadium, Niob und Chrom, sowie ein Eisengruppenelement und Diamantpulver, um daraus ein Gemisch zu bilden;
Sintern der Mischung bei einer hohen Temperatur unter hohem Druck, bei und unter dem Diamant thermodynamisch stabil ist, um so einen Sinterkörper X zu bilden, der ein Bindemittel mit einer festen Lösung enthält, die das Element, Kohlenstoff, Wolfram und das Eisengruppenelement sowie Diamantteilchen enthält, wobei benachbarte Teilchen miteinander verbunden sind; und
Durchführen einer Säurebehandlung auf dem Sinterkörper X, um das Eisengruppenelement zu eluieren.

7. Verfahren nach Anspruch 6, wobei die Säurebehandlung durch Eintauchen des Sinterkörpers X in eine Säurelösung durchgeführt wird, die mindestens ein Element aus der Gruppe bestehend aus Salpetersäure und Salzsäure enthält.

## Revendications

1. Corps en diamant fritté comprenant des particules de diamant, un liant et du vide,
lesdites particules de diamant présentant un diamètre de particule moyen inférieur ou égal à 2 *µ*m ;
lesdites particules de diamant représentant une teneur supérieure ou égale à 80 % en volume mais inférieure à 98 % en volume ;
ledit liant comprenant une solution solide ainsi qu'un élément du groupe du fer, dans lequel ladite solution solide contient du carbone et du tungstène et au moins un élément sélectionné parmi un groupe constitué par le titane, le zirconium, le vanadium, le niobium et le chrome ;
ladite solution solide représentant une teneur supérieure ou égale à 0,1 % en volume mais inférieure à 15 % en volume, et l'élément du groupe du fer représentant une teneur supérieure ou égale à 0,1 % en volume mais inférieure à 3 % en volume ;
des particules voisines desdites particules de diamant étant liées entre elles.

2. Corps en diamant fritté selon la revendication 1, dans lequel le vide représente une teneur supérieure ou égale à 0,1 % en volume mais inférieure à 10 % en volume.

3. Corps en diamant fritté selon l'une quelconque des revendications 1 et 2, dans lequel, dans ladite solution solide, un rapport de composant dudit au moins un élément sélectionné parmi le groupe constitué par le titane, le zirconium, le vanadium, le niobium et le chrome par le tungstène est compris dans une plage supérieure ou égale à 0,4 mais inférieure ou égale à 15,0 en rapport atomique.

4. Corps en diamant fritté selon l'une quelconque des revendications 1 à 3, dans lequel ledit au moins un élément sélectionné parmi le groupe constitué par le titane, le zirconium, le vanadium, le niobium et le chrome est le titane.

5. Corps en diamant fritté selon l'une quelconque des revendications 1 à 4, dans lequel l'élément du groupe du fer est le cobalt.

6. Procédé de production d'un corps en diamant fritté tel que défini dans la revendication 1, comprenant les étapes suivantes :
mélange de carbone et de tungstène avec au moins un élément sélectionné parmi un groupe constitué par le titane, le zirconium, le vanadium, le niobium et le chrome, ainsi qu'un élément du groupe du fer, et de la poudre de diamant pour en obtenir un mélange ;
frittage dudit mélange à une haute température et sous une haute pression jusqu'auxquelles le diamant est thermodynamiquement stable, de manière à former un corps fritté X comprenant un liant qui contient une solution solide contenant ledit élément, du carbone, du tungstène et ledit élément du groupe du fer, ainsi que des particules de diamant comportant des particules voisines liées entre elles ; et
mise en oeuvre d'un traitement acide sur ledit corps fritté X pour éluer l'élément du groupe du fer.

7. Procédé selon la revendication 6, dans lequel ledit traitement acide est mis en oeuvre par immersion du corps fritté X dans une solution acide contenant au moins un acide sélectionné parmi un groupe constitué par l'acide nitrique et l'acide chlorhydrique.
